# EUROPEAN PATENT SPECIFICATION

(11) **EP 1 673 848 B1**
(45) Date of publication and mention of the grant of the patent: **03.01.2007**
(21) Application number: 03818846.2
(22) Date of filing: 18.10.2003
(51) Int. Cl.: H02K 16/02, H02K 21/24, H02K 1/06

(54) **HIGH POWER FLAT THREE PHASE ELECTRIC GENERATOR**
HOCHLEISTUNGS-FLACH-DREIPHASEN-STROMGENERATOR
GENERATEUR ELECTRIQUE TRIPHASE PLAT HAUTE PUISSANCE

(43) Date of publication of application: 28.06.2006
(73) Proprietor: Awad, Malik Saad Zaghlool, B-9032 Wondelgem (BE)
(72) Inventor: Awad, Malik Saad Zaghlool, B-9032 Wondelgem (BE)
(86) International application number: PCT/EG2003/000004
(87) International publication number: WO 2005/036716

(56) References cited:
- WO-A1-03/047069
- GB-A- 2 221 579
- US-A- 4 187 441

## Description

### Field of the Invention

This invention relates to a high power flat three phase axial gap electric generator as defined in claim 1.

### Brief Description of the drawings

FIG. 1 shows a cross section through the generator according to the invention with the stator frame (F) fixed on the base (B) and the two rotors (R₁, R₂) rotating around the axis (A).
FIG. 2 shows a front view of the stator frame (F).
FIG. 3 shows a front view of the first rotor (R₁).
FIG. 4 shows a front view of the second rotor (R₂).
FIG. 5 shows a side view of one of the H shaped iron cores (IC).
FIG. 6 shows the Y (star) connection of the coils.

### Detailed description od the drawings

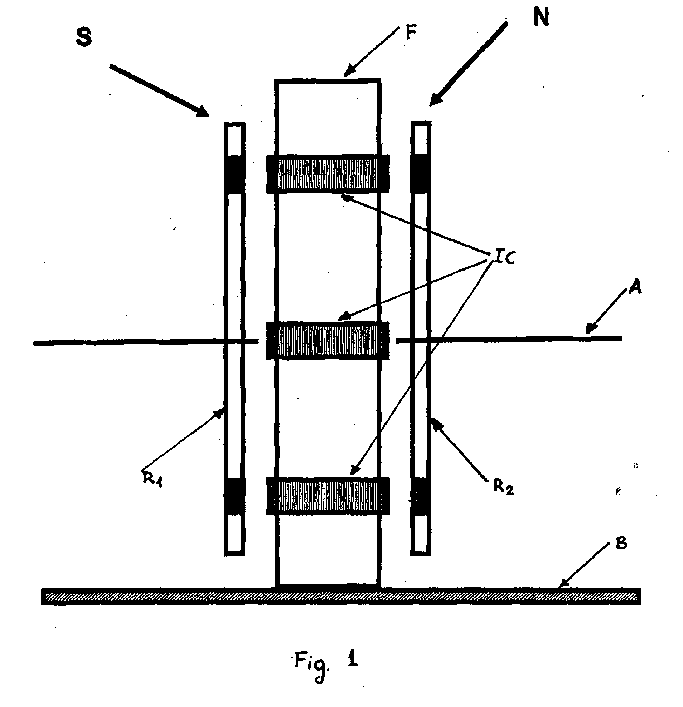

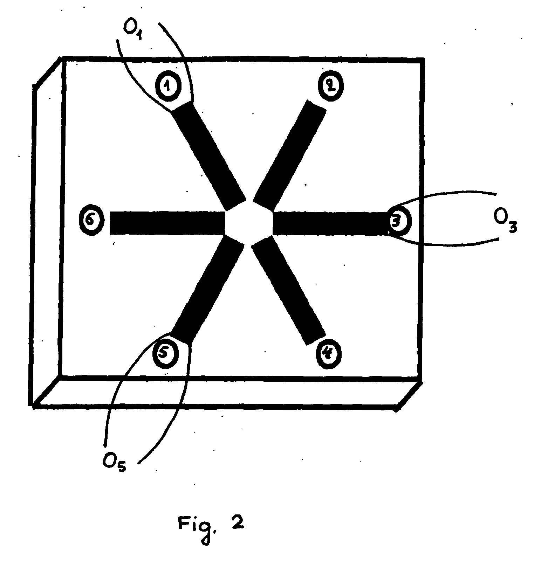

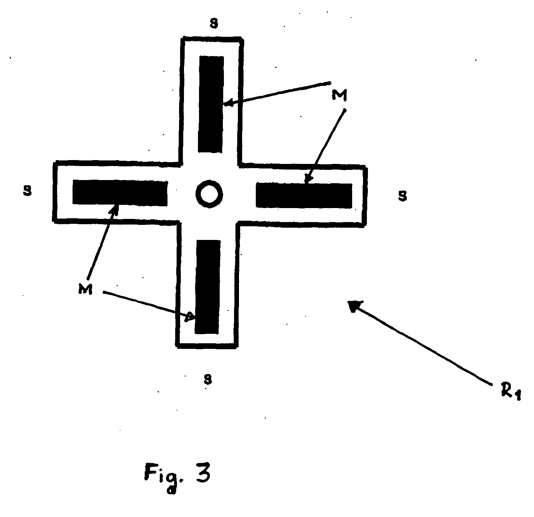

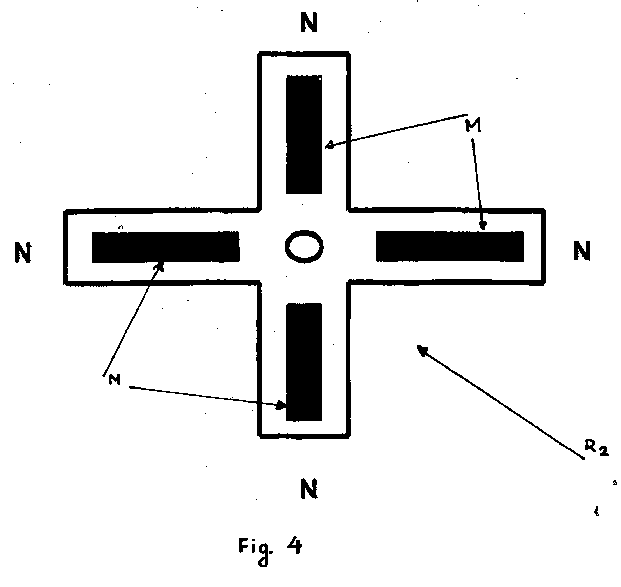

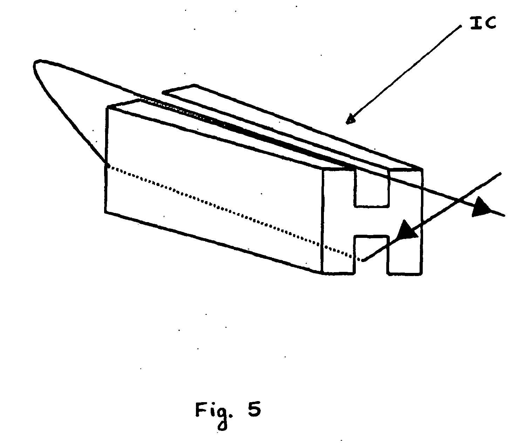

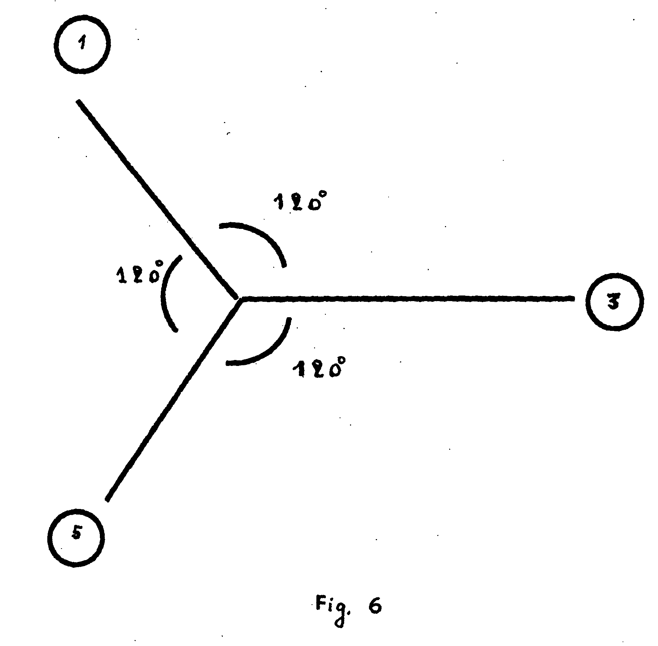

1) Stator (Fig 1 &2) which is six coils winded on H shape iron core (IC) (Fig 5). These are fixed on non ferromagnetic frame (F) (e.g. wood or plastic)
2) These six coil (Fig 2 & 5) are connected as follows coils 4 +1 on serial where the outlet (O₁) from coil 1.
   Coil 2 + 5 on serial where the outlet (O₅) from coil 5.
   Coil 6 + 3 on serial where the outlet (O₃) from coil 3.
3) These outlet are connected as Y (star) connection (Fig 6)
4) The Frame (Fig 1) is fixed on a base (B) 90°.
5) placed on each side of this Frame are two rotors (R₁,R₂) (Fig 3, 4) each consists of four magnets (M) on one side of the stator all magnet are N poles (Fig 4) while the other side are all S poles (Fig 3).
6) Both rotors are fixed on the axis (A) (Fig 1) where N poles face S poles face all the time, these two rotors rotate same time and direction which results in the production of the electric current.

WO 2003 065549 and US 2002 067091 disclose axial-gap machines of the art similar to the one defined in the preamble of claim 1.

## Claims

1. High power flat three phase axial gap electric generator comprising disk-shaped rotors placed on either side of an intermediate stator comprising ferromagnetic cores wound with coils, said rotors being fixed perpendicular to the axis of rotation and each of them comprising four flat rectangular permanent magnets disposed at 90 ° of each other around the axis of rotation so as to form a cross, said generator being
**characterised in that**:
- the direction of the magnetisation of said four permanent magnets is parallel to the axis of rotation
- the polarity at each side of each rotor is constantly only N or only S and opposite to the polarity of the corresponding opposite side of the stator
- the stator comprises six H shaped iron cores arranged like spokes around the axis of rotation on a non ferromagnetic flat frame, so that they are separated from each other by substantially equal angles in the circumferential direction
- each of said stator cores is wound with a coil, diametrically opposite coils are connected in series and have a common output and the six coils are star connected to each other so that the induced current is a three-phase alternating current.

## Patentansprüche

1. Der flache mit Achseraum elektrische 3 Phasen- Generator mit hoher Leistung , der Rotore in Diskusform enthält, die sich auf beiden Seiten des Zwischenstators befinden.
Er enthält die auf ferromagnetischen Kernen aufgewickelten Spulen. Obengenannte Rotore werden senkrecht zu der Drehachse befestigt und jeder von ihnen enthält vier flache viereckige Dauermagnete, jeder mit 90 Winkelgrad zu den anderen um die Drehachse herum angeordnet, so dass sie ein Kreuz bilden. Das o/g Agregat hat folgende Eigenschaften:
- die Richtung der Magnetisierung der o/g Dauermagnete ist parallel zu der rehachse
- die Polarisierung aller Rotore von beiden Seiten ist konstant nur N oder S und umgekehrt zu der entsprechenden Polarisierung auf dem zweiten Ende des Stators.
- der Stator enthält sechs H- förmige Kerne, die sich sternförmig zu der Drehachse auf einem flachen unferromagnetischen Rahmen befinden, so dass sie separat zueinander genau unter gleichem Winkeln zu dem Kreisumfang liegen.
- auf jedem o/g Kern des Stators wird eine Spule aufgewickelt Die Spulen werden zueinander quer in einer Linie angeordnet, seriell verbunden, haben eine gemeinsame Mündung, und sechs Spulen werden insgesamt sternförmig verbunden, so dass der drei- Phasen- Wechselstrom induziert wird.

## Revendications

1. Générateur électrique haute puissance triphasée plate à ouverture axiale comprenant des rotours en forme du disque placé de chaque coté de stator intermédiaire contenant des noyaux ferromagnétiques enroulés par des bobines, ces roteurs mentionnés sont attachés de manière perpendiculaire par apport a l'axe du rotation ou chacun d'eux contient quatre magnets permanents rectangulaires disposes à 90°
un de l'autre autour de l'axe de rotation afin de former une croix, les caractéristiques de ce générateur mentionnent sont:
- la direction de la magnétisation de ces quatre magnets permanents est paralelle à l'axe de rotation
- la polarité de chaque côté de chaque rotor est constamment et uniquement Nord ou Sud et face la polarité du rotour correspondant situe au coté opposé du stator
- le stator comprend six noyaux de fer en H-forme placés comme les rayons autour de l'axe de rotation dans une cadre plat nonferromagnetique a la manière de façon à être séparés l'un de l'autre par des angles égaux dans une direction circulaire
- chaque noyau du stateur est enroulé par une bobine, les bobines opposées diamétralement sont reliées en série et ont une terminaison commune et les six bobines sont reliées l'une à l'autre en étoile afin de produire par induction le courant alternative troiphase.
